**Europäisches Patentamt**

(19) **European Patent Office**

**Office européen des brevets**

(11) Publication number: **0 231 815**
**B1**

(12) # EUROPEAN PATENT SPECIFICATION

(45) Date of publication of the patent specification:
**04.10.89**

(51) Int. Cl.⁴: **B62D 25/08,** B62D 33/06,
B60K 11/08

(21) Application number: **87100786.0**

(22) Date of filing: **21.01.87**

(54) Front grille for a motor vehicle radiator.

(30) Priority: **04.02.86 IT 5292886 U**

(43) Date of publication of application:
**12.08.87 Bulletin 87/33**

(45) Publication of the grant of the patent:
**04.10.89 Bulletin 89/40**

(84) Designated Contracting States:
**DE ES FR GB NL SE**

(56) References cited:
**EP-A- 0 030 319**
**FR-A- 2 240 858**
**FR-A- 2 366 140**
**US-A- 4 410 032**

**AUTOMOTIVE ENGINEERING, vol. 84, no. 6, June 1976,**
**page 25; "Lamellar grill cuts wind drag"**

(73) Proprietor: **IVECO FIAT S.p.A., Via Puglia 35,**
**I-10156 Torino(IT)**

(72) Inventor: **Savio, Piero, Via Boito, 1,**
**I-10040 Borgaretto(IT)**

(74) Representative: **Prato, Roberto et al, c/o Ingg. Carlo e**
**Mario Torta Via Viotti 9, I-10121 Torino(IT)**

## Description

This invention relates to a front grille for protecting the radiator of a motor vehicle, particularly a heavy vehicle, by which effective masking of the parts and members located to the rear of the grille is obtained, and which at the same time enables an air stream of high throughput to be conveyed with low aerodynamic resistance.

The known front grilles of this type normally comprise panels containing perforations of various shapes to allow the air to pass through them. In order to obtain good air flow, the dimensions of said perforations are rather large. The result is that the masking of the vehicle parts and members located to the rear of the grille is relatively poor, resulting in the need for additional arrangements to obtain masking, such as colouring said parts and members with black paint.

Grilles are also known comprising a plurality of horizontal strips, each of which is shaped to form with the adjacent strip an air passage opening contained in a substantially horizontal plane. In this manner the rear part of each of the strips forms an effective screen for the parts and members to the rear of the grille. Although in grilles of this type the screening action is substantially better than in the preceding type, the resistance to air passage is considerably increased, resulting in air flows of insufficient throughput.

An object of the present invention is to provide a front grille for a motor vehicle radiator of the aforesaid type, which is free from the said drawbacks, and which in particular allows effective screening of the parts and members disposed to the rear of the grille, and enables an air stream of high throughput to be conveyed with low aerodynamic resistance.

The objects of the present invention are attained by a front grille for a motor vehicle radiator, characterised by comprising a first and a second series of bars, the longitudinal axis of which is horizontal and of which those of the first series have a greater width than those of the second series, at least one bar of the second series being interposed between two adjacent bars of the first series; conveniently, a pair of bars are interposed between two adjacent bars of the first series, and each bar, at least of the first series, is bounded by a pair of curved surfaces such as to define a cross-section, taken on a plane orthogonal to said longitudinal axis, which has a profile substantially of wing type.

The present invention will be more apparent from the detailed description thereof given hereinafter by way of example with reference to the accompanying drawings, in which:

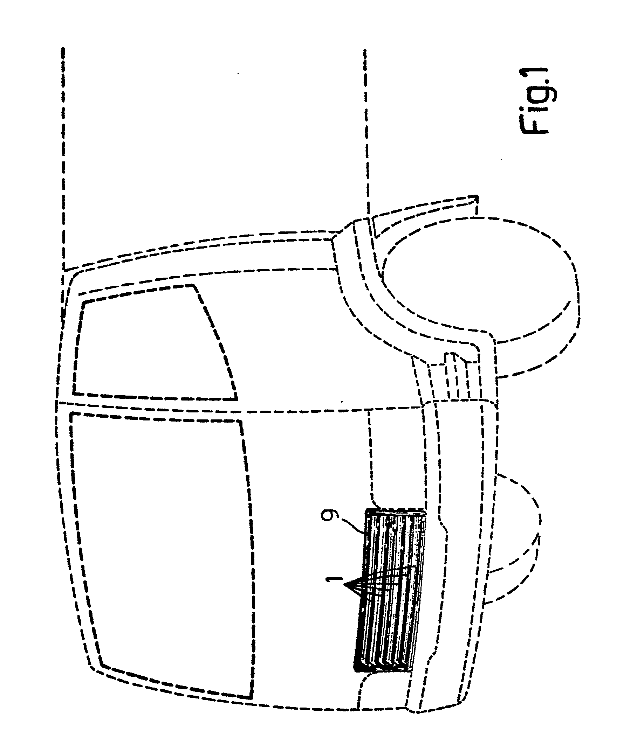

Figure 1 is a front perspective view of the grille according to the invention for protecting the radiator of a heavy vehicle;

Figure 2 is a front view of the grille of Figure 1;

Figure 3 is a section through the grille of Figure 2 on the line III-III.

The grille of the invention is arranged to close the front compartment of a motor vehicle body in which the radiator is disposed. Although this grille is particularly suitable for mounting on an industrial vehicle, it can be used on any other motor vehicle.

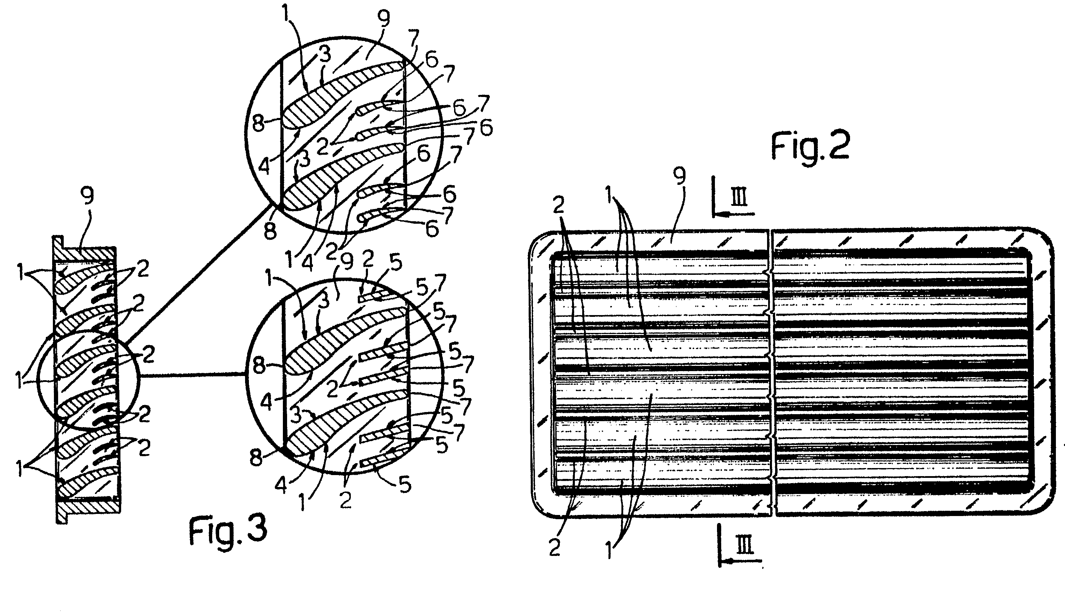

The grille comprises substantially a first and a second series of bars 1 and 2, having a horizontal longitudinal axis. The width of each bar of the first series is greater than that of the second series, as can be seen from Figure 3, and at least one bar of the second series is interposed between two adjacent bars of the first. Conveniently, as can be seen from the two detailed enlarged-scale views of Figure 3, a pair of bars 2 of the second series are interposed between two adjacent bars 1 of the first series.

Although each bar of the first series can be bounded by flat or curved surfaces, each of them is conveniently bounded by a pair of curved surfaces 3 and 4, such as to define a cross-section, taken on a plane orthogonal to the longitudinal axis of the bar, which has a profile substantially of wing type. Each bar 2 of the second series can be bounded by a pair of opposing flat surfaces 5 or by a pair of curved surfaces 6, such as to again define a cross-section, taken on a plane orthogonal to the longitudinal axis of the bar, which has a profile of wing type. The rear edges 7 of the bars 1 and 2 of the two series are aligned in the same vertical plane.

In addition each bar, at least of the first series 1, is orientated relative to the horizontal direction such that the angle of incidence of the said wing profile is negative, ie the front edge 8 of the bar is at a lower level than the rear edge 7. Conveniently, the bars of the two series can be supported by a single rectangular frame 9, or a different frame can be provided for each series of bars.

Conveniently, the bars of the two series are constructed of synthetic material, for example a thermoplastic material, integrally with the relative frame 9 by the usual moulding methods.

The grille of the invention is able to provide good screening of the parts and members disposed to the rear of the grille. In this respect, even though the bars 1 of the first series are spaced apart such as to leave a fairly large interposed gap, the zone to the rear of the grille cannot be seen through this gap because of the presence of the bars 2 of the second series, which screen each of said gaps.

Moreover, the aerodynamic resistance to the air passing through the grille is very low, both because of the large size of the gaps between the bars 1 of the first series, and because of the shape of the bars, which have a sectional profile substantially of wing shape. The bars 2 of the second series offer no substantial aerodynamic resistance to the air flow because of their fairly small thickness, even when these bars are bounded only by pairs of flat surfaces 5, such as those shown in the lower detailed view of Figure 3.

There is therefore an air flow of high throughput through the grille which has been found to be about 30% greater than that obtainable by those grilles of the aforesaid prior type able to provide effective screening action.

The grille of the present invention can be produced simply, rapidly and at low cost by the usual moulding methods. By virtue of the shape of the bars 1 and 2 of the two series, undercuts are not present and thus the grille moulds can be very simple, and the moulding cycle time very small.

## Claims

1. A front grille for a motor vehicle radiator, characterised by comprising a first (1) and a second (2) series of bars, the longitudinal axis of which is horizontal and of which those of the first series (1) have a greater width than those of the second (2) series, at least one bar of the second series being interposed between two adjacent bars of the first series and each bar, at least of the first series, being bounded by a pair of curved surfaces such as to define a cross-section, taken on a plane orthogonal to said longitudinal axis, which has a profile substantially of wing type.

2. A grille as claimed in claim 1, characterised in that a pair of bars of the second series (2) are interposed between two adjacent bars of the first series (1).

3. A grille as claimed in one of the preceding claims, characterised in that each bar, at least of the first series (1), is orientated relative to the horizontal direction in such a manner that the angle of inclination of said wing profile is negative.

4. A grille as claimed in one of the preceding claims, characterised in that the rear edges (17) of the bars of the two series are aligned in the same vertical plane.

5. A grille as claimed in one of the preceding claims, characterised in that said bars at least of said first series (1) are supported by substantially rectangular frame (9).

## Patentansprüche

1. Vorderer Kühlergrill für den Kühler eines Motorfahrzeugs, dadurch gekennzeichnet, daß er aus einer ersten (1) und einer zweiten (2) Serie von Stäben besteht, aus den Längsachsen derjenigen, die horizontal sind und aus denjenigen der ersten Serie (1), die breiter sind als die der zweiten Serie, mindestens ein Stab der zweiten Serie ist zwischen zwei benachbarte Stäbe der ersten Serie eingeführt, jeder Stab der ersten Serie ist durch ein Paar gebogene Oberflächen begrenzt, in der Art, daß er einen Kreuzungsbereich bildet, der eine rechtwinklige Ebene auf besagten Längsachsen einnimmt, diese haben ein Profil nach dem Vorbild eines Flügels.

2. Kühlergrill nach Anspruch 1, dadurch gekennzeichnet, daß ein Paar Stäbe der zweiten Serie (2) zwischen zwei benachbarte Stäbe der ersten Serie (1) eingeführt sind.

3. Kühlergrill nach einem der vorangegangenen Ansprüche, dadurch gekennzeichnet, daß jeder Stab der ersten Serie (1) in horizontaler Richtung ausgerichtet ist, in der Art, daß der Neigungswinkel des besagten Flügelprofils negativ ist.

4. Kühlergrill nach einem der vorangegangenen Ansprüche, dadurch gekennzeichnet, daß die hinteren Enden (17) der Stäbe der beiden Serien in derselben vertikalen Ebene ausgerichtet sind.

5. Kühlergrill nach einem der vorangegangenen Ansprüche, dadurch gekennzeichnet, daß die Stäbe der besagten ersten Serie (1) von einem grundsätzlich rechteckigen Rahmen (9) getragen werden.

## Revendications

1. Grille frontale pour radiateur de véhicule à moteur, caractérisée par le fait qu'elle comprend une première (1) et une seconde (2) séries de barreaux, dont l'axe longitudinal est horizontal et dont ceux de la première série (1) ont une largeur plus grande que celles de la seconde (2) série, au moins un barreau de la second sériee étant interposé entre deux barreaux adjacents de la première série et chaque barreau, au moins de la première série, étant délimité par une paire de surfaces courbes telles qu'elles définissent une section, prise dans un plan horizontal audit axe longitudinal, qui a un profil sensiblement du type aile.

2. Grille selon la revendication 1, caractérisée par le fait qu'une paire de barreaux de la seconde série (2) sont interposés entre deux barreaux adjacents de la première série.

3. Grille selon l'une des revendications présentes, caractérisée par le fait que chaque barreau, au moins de la première série (1), est orienté, relativement à la direction horizontale, de manière que l'angle d'inclinaison dudit profil d'aile est négatif.

4. Grille selon l'une des revendications présentes, caractérisée par le fait que les bords arrière (17) des barreaux des deux séries sont alignés dans le même plan vertical.

5. Grille selon l'une des revendications présentes, caractérisée par le fait que lesdits barreaux, au moins de ladite première série (1), sont supportés par un cadre (9) sensiblement rectangulaire.

Fig.1

EP 0 231 815 B1

Fig.2

Fig.3